# EUROPÄISCHE PATENTSCHRIFT

(11) **EP 2 831 937 B1**
(45) Veröffentlichungstag und Bekanntmachung des Hinweises auf die Patenterteilung: **29.06.2016**
(21) Anmeldenummer: 13701785.1
(22) Anmeldetag: 30.01.2013
(51) Int. Cl.: H01M 2/20, H01M 2/26, H01M 2/34, H01M 10/0525

(54) **ZELLVERBINDER FÜR EIN BATTERIESYSTEM ODER FÜR EINE BATTERIEZELLE EINES ELEKTRISCHEN ENERGIESPEICHERS, BATTERIE UND KRAFTFAHRZEUG**
CELL CONNECTOR FOR A BATTERY SYSTEM OR FOR A BATTERY CELL OF AN ELECTRICAL ENERGY STORE, BATTERY AND MOTOR VEHICLE
CONNECTEUR D'ÉLÉMENTS POUR SYSTÈME DE BATTERIE OU POUR UN ÉLÉMENT DE BATTERIE D'UN DISPOSITIF DE STOCKAGE D'ÉNERGIE ÉLECTRIQUE, BATTERIE ET VÉHICULE À MOTEUR

(30) Priorität: 28.03.2012 DE 102012205021
(43) Veröffentlichungstag der Anmeldung: 04.02.2015
(73) Patentinhaber: Robert Bosch GmbH, 70442 Stuttgart (DE); Samsung SDI Co., Ltd., Yongin-si Gyeonggi-do 446-577 (KR)
(72) Erfinder: SCHWEINBENZ, Jochen, 70469 Stuttgart (DE); WIPFLER, Klaus, 75223 Niefern-Oeschelbronn (DE); KOHLBERGER, Markus, 70174 Stuttgart (DE)
(74) Vertreter: Bee, Joachim
(86) Internationale Anmeldenummer: PCT/EP2013/051774
(87) Internationale Veröffentlichungsnummer: WO 2013/143720

(56) Entgegenhaltungen:
- EP-A1- 1 780 819
- EP-A1- 2 306 485
- EP-A1- 2 372 808
- DE-A1-102010 044 455
- US-B1- 6 377 432

## Beschreibung

Die vorliegende Erfindung betrifft einen Zellverbinder für ein Batteriesystem oder für eine Batteriezelle eines elektrischen Energiespeichers für den Antrieb eines Kraftfahrzeuges, wobei als Batteriezellen insbesondere Lithium-Ionen-Batteriezellen Verwendung finden.

Ein mindestens für eine Batteriezelle eines elektrischen Energiespeichers vorgesehener Zellverbinder, der die elektrisch leitende Verbindung zu einem Elektromotor eines Elektrokraftfahrzeuges oder eines Hybridfahrzeuges oder zu weiteren miteinander verschalteten Batteriezellen herstellt, besitzt zwischen seinen beiden Kontaktenden einen Bereich mit einer Querschnittsverjüngung, die zusätzlich mit einer permanenten mechanischen Vorspannung beaufschlagt sein kann.

Bei einem durch Kurzschluss bedingten erhöhten kurzzeitigen Stromfluss erfolgt eine Trennung an der im Querschnitt geschwächten Stelle des Zellverbinders, die eine Schmelzsicherung darstellt.

Eine Batteriezelle oder mehrere Batteriezellen eines Batteriesystems, die zum Antrieb von Elektrokraftfahrzeugen oder Hybridfahrzeugen dienen, kann beziehungsweise können in ihrer Verschaltung zu einem Batteriesystem im aufgeladenen Zustand, insbesondere bei Verwendung von Lithium-Ionen-Batteriezellen, Betriebsspannungen von bis zu 600 V über Hochvoltpfade an ein Antriebssystem abgeben. Bei einer Störung in einer defekten Lithium-Ionen-Batteriezelle können dabei kurzfristig Stromflüsse bis zu 1000 A auftreten, die zu einem irreversiblen Schaden des gesamten Antriebssystems und/oder weiterer in einem Zellenverbund miteinander verschalteten Lithium-Ionen-Batteriezellen führen können. Eine geschädigte Lithium-Ionen-Batteriezelle muss daher auf kürzestem Wege vom Batteriesystem getrennt werden, um Folgeschäden an einem elektrischen Energiespeicher, an einem Antriebssystem eines Elektrokraftfahrzeuges oder eines Hybridfahrzeuges zu vermeiden.

### Stand der Technik

Es zeigt die DE 10 2008 043 946 A1 eine Sicherungseinrichtung für eine Akkumulatorzelle, die eine in einer elastischen Zellenumhüllung angeordnete Elektrodengruppe und mindestens einen elektrischen Anschluss aufweist. Die Sicherungseinrichtung ist prinzipiell derart ausgebildet, dass ein Blockierglied vorgesehen ist, das mindestens einen ersten, dem elektrischen Anschluss zugeordneten elektrischen Kontakt mit mindestens einem zweiten elektrischen Kontakt in einer lösbaren elektrischen Verbindung blockiert, wobei das Blockierglied dazu ausgebildet ist, bei einem Ausdehnen der Zellenumhüllung durch eine Volumenänderung der Akkumulatorzelle im Betrieb die lösbare elektrische Verbindung freizugeben, um eine Trennung des zweiten Kontaktes von dem ersten Kontakt zu ermöglichen

### Offenbarung der Erfindung

Die Erfindung geht aus von einem Zellverbinder für ein Batteriesystem, bestehend aus einer Vielzahl von Lithium-Ionen-Batteriezellen, wobei ein Zellverbinder eine ihm jeweils zugeordnete Schmelzsicherung aufweist.

Das hat den Vorteil, dass bei einer plötzlichen Störung in einer defekten Lithium-Ionen-Batteriezelle ein auftretender Kurzschlussstrom nicht weiter in ein Antriebssystem eines Elektrokraftfahrzeuges oder eines Hybridfahrzeuges oder in weitere miteinander verschaltete Lithium-Ionen-Batteriezellen geleitet werden kann. Die Schmelzsicherung unterbricht dabei augenblicklich den ansonsten fortbestehenden elektrischen Kontakt.

Dementsprechend ist die Schmelzsicherung in ihrer Ausbildung so ausgelegt, dass ein zwischen den beiden Kontaktenden angeordneter Bereich des Zellverbinders mit einer Verjüngung oder einer Aussparung angeordnet ist. Dadurch kann an dieser Stelle bei einem plötzlich auftretenden Kurzschluss in einer Lithium-Ionen-Batteriezelle der Zellverbinder unterbrochen werden, so dass ein weitergehender Schaden an weiteren mit einer defekten Lithium-Ionen-Batteriezelle verschalteten oder ein in Richtung eines Antriebssystems gehender unterbunden werden.

Eine weitere Ausbildung der Schmelzsicherung mit dem Zusatzeffekt eines mechanischen Schwingungsausgleiches im Zellverbinder kann dadurch geschaffen werden, indem der Zellverbinder ein Ausgleichselement in Form einer Auswölbung aufweist und die Aussparung nicht im Bereich des Ausgleichselementes liegt.

Dadurch können Fahrzeugvibrationen besser kompensiert werden und der Zellverbinder ist an seiner im Querschnitt geschwächten Stelle mit der Aussparung, die die Schmelzsicherung darstellt, nicht durch eine etwaige Ermüdung des Werkstoffs gefährdet.

Die erfindungsgemäße Integrierung einer Schmelzsicherung in einem Zellverbinder besteht darin, dass sie als Bestandteil eines Zellverbinders vorliegt, der als Kabel- oder Gewebeverbinder ausgebildet ist. In dieser Form ist die Ausnutzung des Bauraumes in einem Batteriezellenmodul oder in einem Batteriesystem noch besser möglich.

Der Zellverbinder kann ferner mit einer Eigenschaft solcher Art vorliegen, dass sich bei Trennung der beiden Kontaktenden durch die Schmelzsicherung die jeweils entstehenden Bruchteile voneinander wegbewegen.

Das hat den Vorteil, dass ein Überspringen eines Kurzschlusses durch die Ausbildung eines Lichtbogens vermieden wird.

Zusätzlich kann in einer der zuvor beschriebenen Ausbildungen eines Zellverbinders mit einer Schmelzsicherung vorgesehen werden, dass der die Schmelzsicherung aufweisende Bereich im Zellverbinder eine Ummantelung aus einem Kunststoff aufweist. Das schützt vor Korrosion und bietet eine zusätzliche Isolation, beispielsweise gegenüber benachbarten Batteriezellengehäusen. Schließlich sei zusammenfassend darauf verwiesen, dass eine Batterie mit einer Vielzahl von Lithium-Ionen-Batteriezellen, die elektrisch miteinander verbunden sind, mit einem Zellverbinder der erfindungsgemäß beschriebenen Art vorliegen kann.

### Zeichnungen

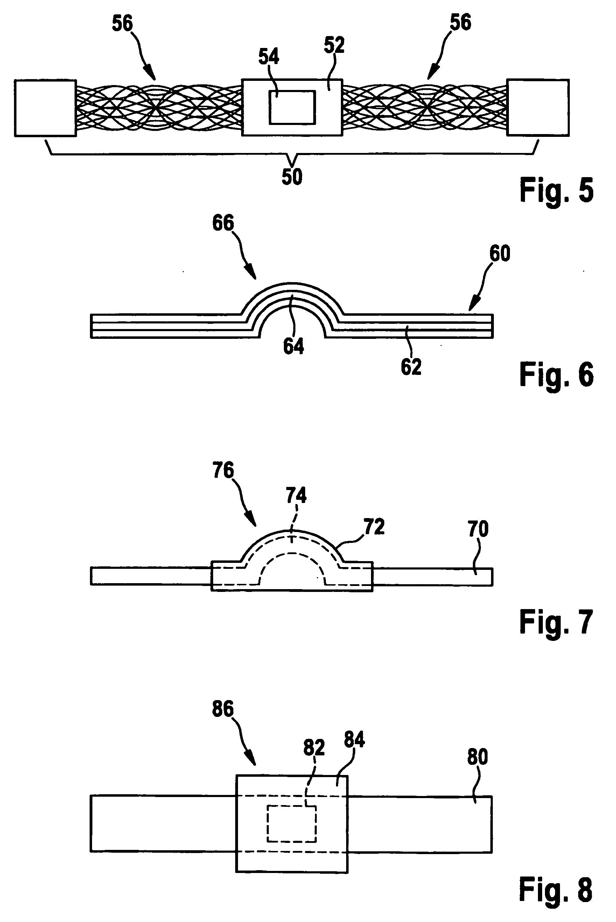

Die Erfindung wird anhand der Zeichnungen und der nachfolgenden Beschreibung näher erläutert. Die erfindungsgemäße Ausführungsform wird in Fig. 5 dargestellt. Es zeigen
Figur 1 einen Zellverbinder mit einer Aussparung,
Figur 2 einen Zellverbinder mit einer Verjüngung,
Figur 3 einen Zellverbinder mit einer Auswölbung und mit einer Aussparung,
Figur 4 einen Zellverbinder mit einer Auswölbung, einer Verjüngung und einer Aussparung,
Figur 5 einen Kabel- oder Gewebeverbinder mit einer integrierten Schmelzsicherung,
Figur 6 einen Zellverbinder mit einer Auswölbung, der aus mehreren Blechstreifen oder metallenen Folienschichten besteht,
Figur 7 und 8 einen Zellverbinder mit einer Auswölbung oder einer Aussparung, bei Bedeckung der Schmelzsicherung mit einem Kunststoff, und
Figur 9 und 10 einen Zellverbinder mit sich voneinander gleich- oder gegenläufig wegbewegenden Bruchteilen seiner Kontaktenden.

### Ausführungsformen

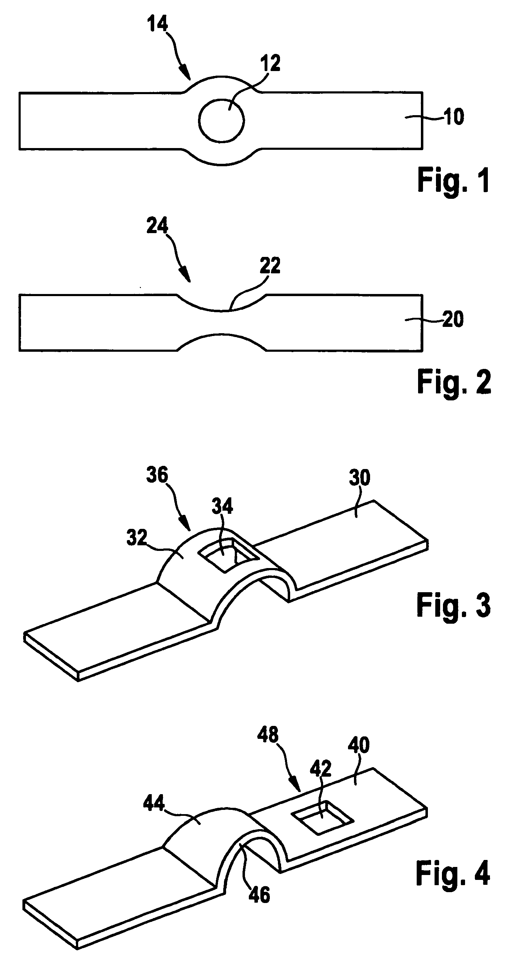

Nach Figur 1 ist ein Zellverbinder 10 mit einer in ihm eingebrachten Aussparung 12 dargestellt. Die an der Aussparung 12 bedingte Schwächung des Leiterquerschnitts des Zellverbinders 10 schafft hierdurch den Bereich einer Schmelzsicherung 14.

In Figur 2 besitzt der Zellverbinder 20 in einem definierten Bereich eine Verjüngung 22, die, in ähnlicher Weise wie nach Figur 1, eine Querschnittsschwächung des Leiterquerschnitts des Zellverbinders 20 darstellt und insofern als Schmelzsicherung 24 wirkt.

In einer Ausbildung nach Figur 3 zeigt der Zellverbinder 30 neben der eine Aussparung 34 aufweisenden Schmelzsicherung 36 zusätzlich eine mechanische Fahrzeugvibration ausgleichende Auswölbung 32. Die Aussparung 34 befindet sich hierbei im oberen Bereich der Auswölbung 32.

Mit Figur 4 ist die Schmelzsicherung 48 als Kombination einer Auswölbung 44, einer Verjüngung 46 und einer asymmetrisch zur Auswölbung 44 im Zellverbinder 40 gelegenen Aussparung 42 ausgebildet.

Figur 5 zeigt die erfindungsgemäße Integration einer mit einer Aussparung 54 versehenen Schmelzsicherung 52 in einem elektrisch leitenden Kabel- oder Gewebeverbinder 56, der den Zellverbinder 50 darstellt.

In Figur 6 ist ein Zellverbinder 60, bestehend aus mehreren Lagen von Blechstreifen oder aufeinander liegenden metallenen Folienschichten 62, mit einer Auswölbung 64, die die Schmelzsicherung 66 darstellt, vorgestellt. Ein derartig gestalteter Zellverbinder 60 besitzt eine höhere mechanische Festigkeit. Die Blechstreifen oder Folienschichten 62 sind dabei an den Kontaktenden des Zellverbinders 60 fest miteinander verbunden.

Mit den Figuren 7 und 8 werden Schmelzsicherungen 76, 86 mit einer Auswölbung 74 oder einer Aussparung 82 dargestellt, wobei der Bereich der Schmelzsicherungen 76, 86 mit einer Ummantelung 72, 84 aus einem Kunststoff bedeckt ist.

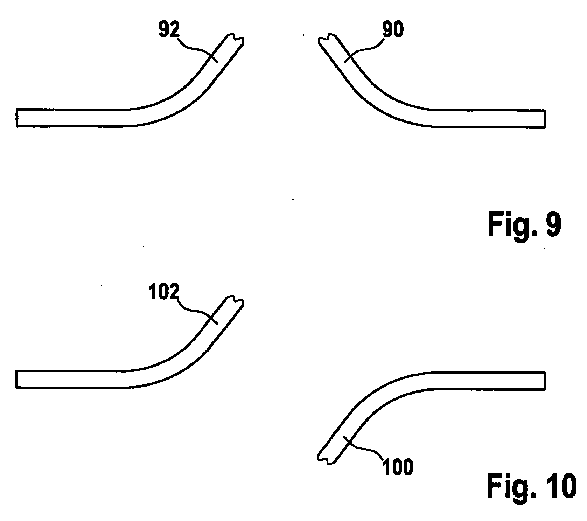

Die Figuren 9 und 10 zeigen, wie die Bruchteile 90, 92, 100, 102 einer Schmelzsicherung voneinander wegstreben, wenn ein Kurzschluss eingetreten ist. Das ist möglich, wenn der Bereich einer Schmelzsicherung unter einer permanent vorhandenen mechanischen Vorspannung gehalten ist.

## Patentansprüche

1. Zellverbinder (10, 20, 30, 40, 50, 60, 70, 80) für ein Batteriesystem, bestehend aus einer Vielzahl von Lithium-Ionen-Batteriezellen, wobei ein Zellverbinder (10, 20, 30, 40, 50, 60, 70, 80) eine ihm jeweils zugeordnete Schmelzsicherung (14, 24, 36, 48, 52, 66, 76, 86) aufweist, **dadurch gekennzeichnet, dass** die Schmelzsicherung (52) in den Zellverbinder (50) integriert ist, der als Kabel- oder Gewebeverbinder (56) ausgebildet ist.

2. Zellverbinder (10, 20) nach Anspruch 1, wobei die Schmelzsicherung (14, 24) ein zwischen den beiden Kontaktenden angeordneter Bereich des Zellverbinders (10, 20) mit einer Aussparung (12) oder einer Verjüngung (22) ist.

3. Zellverbinder (40) nach Anspruch 1, wobei er ein Ausgleichselement in Form einer Auswölbung (44) aufweist und die Aussparung (42) nicht im Bereich des Ausgleichselementes liegt.

4. Zellverbinder (10, 20, 30, 40, 60, 70, 80) nach Anspruch 1, 2 oder 3, wobei sich bei Trennung der beiden Kontaktenden durch die Schmelzsicherung (14, 24, 36, 48, 66, 76, 86) die jeweils entstehenden Bruchteile (90, 92, 100, 102) voneinander wegbewegen.

5. Zellverbinder (70, 80) nach einem der vorhergehenden Ansprüche, wobei der die Schmelzsicherung (76, 86) aufweisende Bereich in einem der Zellverbinder (70, 80) eine Ummantelung (72, 84) aus einem Kunststoff aufweist.

6. Batterie mit einer Vielzahl von Lithium-Ionen-Batteriezellen, die über Zellverbinder (10, 20, 30, 40, 50, 60, 70, 80) nach einem der Ansprüche 1 bis 5 elektrisch miteinander verbunden sind.

7. Kraftfahrzeug mit einer Batterie, die Zellverbinder (10, 20, 30, 40, 50, 60, 70, 80) für die einzelnen Lithium-Ionen-Batteriezellen oder für eine Lithium-Ionen-Batteriezelle nach einem der Ansprüche 1 bis 5 enthält, wobei die Batterie mit einem Antriebssystem des Kraftfahrzeuges verbunden ist.

## Claims

1. Cell connector (10, 20, 30, 40, 50, 60, 70, 80) for a battery system, comprising a large number of lithium-ion battery cells, wherein a cell connector (10, 20, 30, 40, 50, 60, 70, 80) has a respectively associated fuse (14, 24, 36, 48, 52, 66, 76, 86), **characterized in that** the fuse (52) is integrated into the cell connector (50) which is in the form of a cable or fabric connector (56).

2. Cell connector (10, 20) according to Claim 1, wherein the fuse (14, 24) is a region of the cell connector (10, 20) which is arranged between the two contact ends and has a cutout (12) or a tapered portion (22).

3. Cell connector (40) according to Claim 1, wherein it has a compensation element in the form of a convex portion (44), and the cutout (42) is not situated in the region of the compensation element.

4. Cell connector (10, 20, 30, 40, 60, 70, 80) according to Claim 1, 2 or 3, wherein, when the two contact ends are separated by the fuse (14, 24, 36, 48, 66, 76, 86), the respectively created fractions (90, 92, 100, 102) move away from one another.

5. Cell connector (70, 80) according to one of the preceding claims, wherein the region, which exhibits the fuse (76, 86), in one of the cell connectors (70, 80) has a plastic sheathing (72, 84).

6. Battery having a large number of lithium-ion battery cells which are electrically connected to one another by means of cell connectors (10, 20, 30, 40, 50, 60, 70, 80) according to one of Claims 1 to 5.

7. Motor vehicle having a battery which contains the cell connectors (10, 20, 30, 40, 50, 60, 70, 80) for the individual lithium-ion battery cells or for a lithium-ion battery cell according to one of Claims 1 to 5, wherein the battery is connected to a drive system of the motor vehicle.

## Revendications

1. Connecteur d'éléments (10, 20, 30, 40, 50, 60, 70, 80) pour un système de batterie, se composant d'une multiplicité d'éléments de batterie lithium-ions, dans lequel un connecteur d'éléments (10, 20, 30, 40, 50, 60, 70, 80) présente un fusible (14, 24, 36, 48, 52, 66, 76, 86) qui lui est respectivement associé, **caractérisé en ce que** le fusible (52) est intégré dans le connecteur d'éléments (50), qui est réalisé sous la forme d'un connecteur de câble ou de tissage (56).

2. Connecteur d'éléments (10, 20) selon la revendication 1, dans lequel le fusible (14, 24) est une région du connecteur d'éléments (10, 20) disposée entre les deux extrémités de contact, avec une découpe (12) ou un rétrécissement (22).

3. Connecteur d'éléments (40) selon la revendication 1, dans lequel il présente un élément de compensation sous la forme d'un bombage (44) et la découpe (42) n'est pas située dans la région de l'élément de compensation.

4. Connecteur d'éléments (10, 20, 30, 40, 60, 70, 80) selon la revendication 1, 2 ou 3, dans lequel, en cas de séparation des deux extrémités de contact par le fusible (14, 24, 36, 48, 66, 76, 86), les deux fragments apparaissant respectivement (90, 92, 100, 102) s'écartent l'un de l'autre.

5. Connecteur d'éléments (70, 80) selon l'une quelconque des revendications précédentes, dans lequel la région présentant le fusible (76, 86) présente dans un des connecteurs d'éléments (70, 80) un gainage (72, 84) en une matière plastique.

6. Batterie avec une multiplicité d'éléments de batterie lithium-ions, qui sont électriquement reliés les uns aux autres par des connecteurs d'éléments (10, 20, 30, 40, 50, 60, 70, 80) selon l'une quelconque des revendications 1 à 5.

7. Véhicule à moteur avec une batterie, qui contient des connecteurs d'éléments (10, 20, 30, 40, 50, 60, 70, 80) pour les éléments de batterie lithium-ions individuels ou pour un élément de batterie lithium-ions selon l'une quelconque des revendications 1 à 5, dans lequel la batterie est reliée à un système d'entraînement du véhicule à moteur.
